# EUROPÄISCHE PATENTSCHRIFT

(11) **EP 0 638 579 B1**
(45) Veröffentlichungstag und Bekanntmachung des Hinweises auf die Patenterteilung: **24.02.1999**
(21) Anmeldenummer: 94112162.6
(22) Anmeldetag: 04.08.1994
(51) Int. Cl.: C07F 9/50

(54) **Verfahren zur Gewinnung von Triphenylphosphin**
Process for recovering triphenyl phosphine
Procédé de récupération de la triphényl phosphine

(30) Priorität: 11.08.1993 DE 4326953
(43) Veröffentlichungstag der Anmeldung: 15.02.1995
(73) Patentinhaber: BASF Aktiengesellschaft, 67063 Ludwigshafen (DE)
(72) Erfinder: Lechtken, Peter, Dr., D-67227 Frankenthal (DE); Sauer, Friedrich, D-67271 Obersuelzen (DE); Fankhaenel, Matthias, Dr., D-67061 Ludwigshafen (DE); Hermeling, Dieter, Dr., D-67227 Frankenthal (DE)

(56) Entgegenhaltungen:
- EP-A- 0 005 746
- GB-A- 1 029 924
- US-A- 4 301 301

## Beschreibung

Die Erfindung betrifft ein Verfahren zur Gewinnung von Triphenylphosphin (TPP) aus einem in Chlorbenzol gelösten Triphenylphosphin-Aluminiumchlorid-Komplex durch Dekomplexierung, Hydrolyse und Extraktion mittels Wasser und anschließender Trennung der Flüssig-flüssig-Dispersion - bestehend aus einer TPP-haltigen Chlorbenzolphase und einer Al- und Cl-Verbindungen enthaltenden Wasserphase - in eine TPP-haltige Chlorbenzolphase und in eine TPP-freie, Al- und Cl-Verbindungen enthaltende Wasserphase.

Die Gewinnung von Triphenylphosphin (TPP) aus Triphenylphosphinoxid (TPPO) erfolgt durch Halogenierung, Reduktion in Chlorbenzol mittels Aluminium zu TPP · 2/3 AlCl₃ und anschließende Dekomplexierung und Hydrolyse gemäß folgender Gleichung, wobei die gelösten Al- und Cl-Verbindungen gleichzeitig mit dem Wasser aus der TPP-haltigen Chlorbenzolphase extrahiert werden:

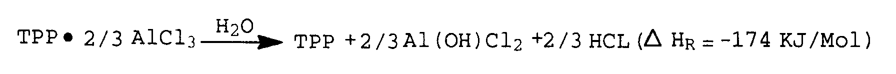

Im Anschluß an die Extraktion wird die vorliegende Flüssig-flüssig-Dispersion - bestehend aus einer TPP-haltigen Chlorbenzolphase und einer Al- und Cl-Verbindungen enthaltenden Wasserphase - in eine TPP-haltige Chlorbenzolphase und in eine TPP-freie, Al- und Cl-Verbindungen enthaltende Wasserphase getrennt.

Dies geschieht derzeit mit bekannten Extraktionsapparaten, wie Mixer-Settler und Extraktionskolonnen. Unabhängig von der Betriebsweise der oben aufgeführten Apparate ist eine vollständige Trennung in die beiden Phasen nicht möglich. Sowohl in der Chlorbenzol- als auch in der Wasserphase verbleibt jeweils ein Rest der anderen Phase in Form von Feindispersionen.

In der GB-A 1 029 924 wird ein Verfahren zur Gewinnung von Trihydrocarbylphosphin offenbart, das die Wirkung eines reduzierenden Metalls auf ein in einem Halogen umgesetzten Lösungsmittel gelösten Trihydrocarbylphosphinoxid anwendet.

Der Erfindung liegt daher die Aufgabe zugrunde, ein Verfahren zu entwickeln, aus der vorliegenden Flüssig-flüssig-Dispersion sowohl eine fremdphasenfreie TPP-haltige Chlorbenzolphase als auch eine fremdphasenfreie Wasserphase zu gewinnen.

Diese Aufgabe wird erfindungsgemäß durch nachstehende Verfahrensmerkmale gelöst:
- Dispergieren von Wasser in der Chlorbenzolphase in einer 1. Mischvorrichtung im Verhältnis von 0,6 bis 0,95 kg Wasser pro kg Chlorbenzollösung, derart, daß sich als Folge der Hydrolyse eine Temperatur im Bereich von 60 bis 90°C einstellt, wobei beim Dispergieren Verweilzeiten von 5 bis 30 Minuten und Energiedichten von 2 bis 10 kW/m³ eingehalten werden,
- Nachdispergieren in einer 2. Mischvorrichtung, wobei Verweilzeiten von 5 bis 60 Minuten und Energiedichten von 0,05 bis 0,5 kW/m³ eingehalten werden, und
- Trennen in die spezifisch schwerere TPP-haltige Chlorbenzolphase und in die spezifisch leichtere TPP-freie, Al- und Cl-Verbindungen enthaltende Wasserphase mittels eines Phasentrenngefäßes.

Es war überraschend und nicht vorhersehbar, daß sich durch die erfindungsgemäße Behandlung der Flüssig-flüssig-Dispersion diese in einem Phasentrenngefäß vollständig trennt und somit eine feindispersionsfreie Chlorbenzolphase mit ca. 10 Gew.-% TPP sowie ≤3 ppm Al und ≤20 ppm Cl, in gelöster Form, und eine feindispersionsfreie Wasserphase, frei von TPP erhalten wird.

Maßgebende Optimierungsgrößen bei dem erfindungsgemäßen Verfahren sind das Phasenverhältnis der wäßrigen zur organischen Phase, die Temperaturführung, die mittlere Verweilzeit und die Energiedichte.

Dem erfindungsgemäßen Verfahren liegt zugrunde, daß die Wasserphase dispergiert wird, wobei ein großer Dispersphasenanteil vorteilhaft ist. Dieser hängt bekanntlich vom Phasenverhältnis ab und wird im vorliegenden Fall dadurch erreicht, daß die Wasserphase im Unterschuß im Verhältnis 0,6-0,95 kg Wasser/kg Chlorbenzolphase vorliegt.

Maßgeblichen Einfluß auf das Phasentrennverhalten hat die Temperatur der Dispersion, die durch gezielte Temperierung der zulaufenden TPP · 2/3 AlCl₃-haltigen Chlorbenzollösung und des zugeführten Wassers auf Temperaturen im Bereich von 60 - 90°C eingestellt wird.

Ein Vorteil des erfindungsgemäßen Verfahrens besteht darin, daß in der 1. Mischvorrichtung die Dispergierbedingungen auf den Stoff- und Wärmeaustausch abgestimmt werden können, ohne Kompromisse in Hinblick auf die anschließende Phasentrennung machen zu müssen.

Die Phasentrennzeiten für die vollständige Trennung der Flüssigflüssig-Dispersion liegen im Bereich von 5 bis 15 Minuten.

Bei hohen Energiedichten von 2 bis 10 kW/m³, insbesondere 5 bis 8 kW/m³, erfolgt der Stoff- und Wärmeaustausch und gleichzeitig wird die Erzeugung einer monodispersen Dispersion begünstigt. Durch das schonende Nachdispergieren in der 2. Mischvorrichtung bei Energiedichten von 0,05 bis 0,5 kW/m³, insbesondere 0,1 bis 0,3 kW/m³, koalisieren aufgrund der unterschiedlichen Relativbewegung die feinen Tropfen, wodurch eine Dispersion (Tropfendurchmesser > 100 µm) mit engem Tropfenspektrum entsteht, die mittels eines Phasentrenngefäßes vollständig getrennt werden kann.

Die Durchführung des Verfahrens kann kontinuierlich oder absatzweise erfolgen. In jedem Fall müssen die angegebenen Phasenverhältnisse, Temperaturen, mittlere Verweilzeiten und Energiedichten eingehalten werden.

Als Mischvorrichtungen in den beiden Verfahrensstufen kommen Rührbehälter in Frage, die mit stufenlos regelbaren Getrieben ausgerüstet sind, damit die Energiedichten innerhalb der angegebenen Grenzen angepaßt werden können. Als Einbauten haben sich 3-flügelige Blattrührer mit Stromstörer bewährt, die eine homogene Durchmischung bewirken und gleichzeitig eine geringe Scherwirkung aufweisen.

Die Erfindung wird nachfolgend anhand von Beispielen erläutert.

### Beispiel 1 (siehe Fig.)

5 kg/h Tpp · 2/3 AlCl₃-haltige Chlorbenzollösung (Strom 1) aus der Dehalogenierung und 4 kg/h Wasser (Strom 2) werden kontinuierlich in den ersten Rührbehälter R1 entsprechend dem Phasenverhältnis wäßrig/organisch 0,8 kg/kg eingespeist, wobei die Chlorbenzollösung auf 130°C und das Wasser auf 20° temperiert sind. Die Rührerdrehzahl ist so eingestellt, daß die Energiedichte 6 kW/m³ beträgt. Beide Ströme werden getaucht nahe am Rührer zugeführt und die erzeugte Dispersion per Überlauf in den Rührbehälter R2 abgezogen. Die mittlere Verweilzeit der Dispersion beträgt 8 Minuten. Die Temperatur in der Dispersion beträgt 71°C. In dem baugleichen Rührbehälter R2 wird die Dispersion bei verminderter Drehzahl, entsprechend einer Energiedichte von 0,15 kW/m³ nachgerührt, wobei die mittlere Verweilzeit 8 Minuten beträgt. In beiden Rührbehältern sind 3-flügelige Blattrührer und Stromstörer eingebaut, die eine homogene Durchmischung bewirken und gleichzeitig eine geringe Scherwirkung aufweisen. Die aus dem Rührbehälter R2 ablaufende Grobdispersion (Tropfendurchmesser ca. 1000 µm) wird in das Phasentrenngefäß B2 eingespeist. Hier erfolgt eine spontane Phasentrennung. Man erhält zwei klare, feindispersionsfreie Phasen. Die mittlere Verweilzeit in dem Phasentrenngefäß beträgt 13 Minuten. Die TPP-haltige Chlorbenzolphase (Strom 3) enthält ≤ 3 ppm Al und ≤20 ppm Cl in gelöster Form. Die Wasserphase (Strom 4) ist frei von TPP.

### Beispiel 2

In ein 1 l-Rührgefäß, welches mit Rührer und Stromstörer analog dem Beispiel 1 ausgestattet ist, werden 0,4 kg Wasser vorgelegt und unter Rühren mit einer Drehzahl, entsprechend einem Energieeintrag von 7,2 kW/m³, 0,5 kg Tpp · 2/3 AlCl₃-haltige Chlorbenzollösung zudosiert. Nach der Dosierung der gesamten Chlorbenzollösung wird die Dispersion 5 Minuten bei gleicher Drehzahl gerührt. Anschließend wird die Dispersion schonend mit verminderter Rührerdrehzahl, entsprechend einer Energiedichte von 0,15 kW/m³, 5 Minuten nachgerührt. Die Temperatur der Dispersion beträgt ca. 70°C. Nach dem Abstellen des Rührers erfolgt eine spontane Trennung der Dispersion. Nach 5 Minuten sind beide Phasen vollständig klar und feindispersionsfrei. Als Unterphase erhält man die TPP-haltige Chlorbenzolphase mit ≤3 ppm Al und ≤20 ppm Cl und als Oberphase die Wasserphase, frei von TPP.

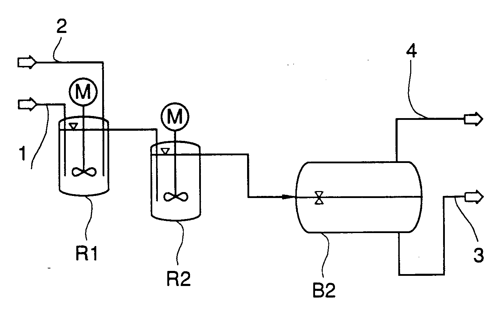

## Patentansprüche

1. Verfahren zur Gewinnung von Triphenylphosphin (TPP) aus einem in Chlorbenzol gelösten Triphenylphosphin-Aluminiumchlorid-Komplex durch Dekomplexierung, Hydrolyse und Extraktion mittels Wasser und anschließender Trennung der Flüssig-flüssig-Dispersion - bestehend aus einer TPP-haltigen Chlorbenzolphase und einer Al- und Cl-Verbindungen enthaltenden Wasserphase - in eine TPP-haltige Chlorbenzolphase und in eine TPP-freie, Al- und Cl-Verbindungen enthaltende Wasserphase, gekennzeichnet durch nachstehende Verfahrensmerkmale,
- Dispergieren von Wasser in der Chlorbenzolphase in einer 1. Mischvorrichtung im Verhältnis von 0,6 bis 0,95 kg Wasser pro kg Chlorbenzollösung, derart, daß sich als Folge der Hydrolyse eine Temperatur im Bereich von 60 bis 90°C einstellt, wobei beim Dispergieren Verweilzeitenvon 5 bis 30 Minuten und Energiedichten von 2 bis 10 kW/m³ eingehalten werden,
- Nachdispergieren in einer 2. Mischvorrichtung, wobei Verweilzeiten von 5 bis 60 Minuten und Energiedichten von 0,05 bis 0,5 kW/m³ eingehalten werden, und
- Trennen in die spezifisch schwerere TPP-haltige Chlorbenzolphase und in die spezifisch leichtere TPP-freie, Al- und Cl-Verbindungen enthaltende Wasserphase mittels eines Phasentrenngefäßes.

## Claims

1. A process for isolating triphenylphosphine (TPP) from a triphenylphosphine/aluminum chloride complex dissolved in chlorobenzene by decomplexation, hydrolysis and extraction using water and subsequent separation of the liquid/liquid dispersion, which is composed of a TPP-containing chlorobenzene phase and of an Al and Cl compound-containing aqueous phase, into a TPP-containing chlorobenzene phase and into a TPP-free, Al and Cl compound-containing aqueous phase, wherein
- water is dispersed in the chlorobenzene phase in a ratio of 0.6-0.95 kg of water per kg of chlorobenzene solution in a 1st mixing apparatus in such a way that the temperature resulting from the hydrolysis is in the range from 60 to 90°C, the dispersion being carried out with holdup times of 5-30 minutes and energy densities of 2-10 kW/m³,
- a second dispersion is carried out in a 2nd mixing apparatus with holdup times of 5-60 minutes and energy densities of 0.05-0.5 kW/m³, and
- the heavier TPP-containing chlorobenzene phase is separated from the lighter TPP-free, Al and Cl compound-containing aqueous phase in a phase separator.

## Revendications

1. Procédé pour isoler la triphénylphosphine (TPP) à partir d'un complexe triphénylphosphine-chlorure d'aluminium en solution dans le chlorobenzène par décomplexation, hydrolyse et extraction à l'eau puis séparation de la dispersion liquide-liquide- consistant en une phase chlorobenzène contenant la TPP et une phase eau contenant des composés d'Al et Cl - en une phase chlorobenzène contenant la TPP et une phase aqueuse exempte de TPP mais contenant des composés d'Al et de Cl, caractérisé par les points suivants
- dans un premier dispositif de mélange on disperse de l'eau dans la phase chlorobenzène, à des proportions de 0,6 à 0,95 kg d'eau par kg de la solution chlorobenzénique, dans des conditions telles qu'à la suite de l'hydrolyse il s'établisse une température dans l'intervalle de 60 à 90°C, et en maintenant au cours de la dispersion des durées de passage de 5 à 30 minutes et des densités d'énergie de 2 à 10 kW/m³,
- dans un deuxième dispositif de mélange, on poursuit la dispersion en maintenant des durées de passage de 5 à 60 minutes et des densités d'énergie de 0,05 à 0,5 kW/m³, et
- à l'aide d'un récipient pour séparation de phases, on sépare selon la phase chlorobenzène contenant la TPP, la plus lourde, et la phase aqueuse exempte de TPP, contenant des composés d'Al et de Cl, plus légère.
